(19) Europäisches Patentamt
European Patent Office
Office européen des brevets

(11) EP 3 754 981 A1

(12) **EUROPEAN PATENT APPLICATION**

(43) Date of publication:
**23.12.2020 Bulletin 2020/52**

(51) Int Cl.:
***H04N 19/00*** *(2014.01)*

(21) Application number: **19305794.0**

(22) Date of filing: **20.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
- **NASER, Karam**
**35576 Cesson-Sévigné (FR)**
- **HE, Yuwen**
**San Diego, CA California 92121 (US)**
- **KEROFSKY, Louis**
**San Diego, CA California 92121 (US)**

(74) Representative: **Huchet, Anne**
**InterDigital CE Patent Holdings**
**20, rue Rouget de Lisle**
**92130 Issy-les-Moulineaux (FR)**

# (54) EXPLICIT SIGNALING OF REDUCED SECONDARY TRANSFORM KERNEL

(57) Because the correlation may be strong and differ for different intra prediction modes in the residual samples generated by intra prediction, secondary transform is applied to transform coefficients from the primary transform to reduce this correlation. In the existing design, the signaling of secondary transform kernel relies on the intra prediction mode of the block, causing dependency of parsing secondary transform kernel index on the intra prediction mode. To remove such parsing dependency, the present embodiments propose to pre-determine a list of transform kernels, which may vary with the block size. To signal which transform kernel is used, the encoder only needs to signal a kernel index into the list of transform kernels. The entropy coding of the kernel index may depend on an explicit signaled intra prediction mode, but will be independent of the MPM process, thus maintaining the parsing independence from the low-level process (e.g., MPM process).

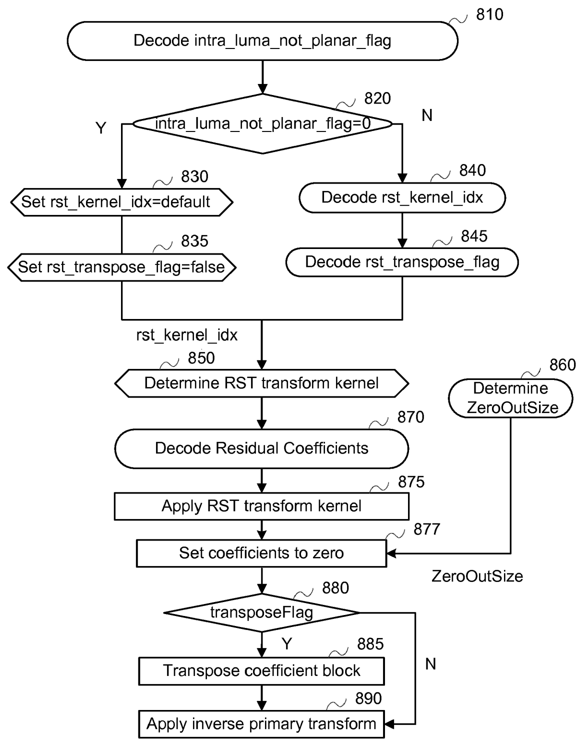


FIG. 8

EP 3 754 981 A1

## Description

### TECHNICAL FIELD

The present embodiments generally relate to a method and an apparatus for video encoding or decoding, and more particularly, to a method and an apparatus for signaling of reduced secondary transform kernel.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

According to an embodiment, a method of video decoding is provided, comprising: accessing a set of transform kernels for a block of an image; decoding an index into said set of transform kernels to indicate a transform kernel to be used for inverse secondary transform; de-quantizing a block of transform coefficients; applying said transform kernel for inverse secondary transform to a subset of said de-quantized transform coefficients to form a block of transform coefficients for said block; applying inverse primary transform to said block of transform coefficients to obtain prediction residuals for said block; obtaining a prediction block for said block based on an intra prediction mode; and reconstructing said block responsive to said prediction residuals and said prediction block.

According to an embodiment, a method of video encoding is provided, comprising: accessing a set of transform kernels for a block of an image; encoding an index into said set of transform kernels to indicate a transform kernel to be used for secondary transform; obtaining prediction residuals for said block based on an intra prediction mode; applying primary transform to said prediction residuals to form transform coefficients for said block; applying said transform kernel for secondary transform to a subset of said transform coefficients to modify said transform coefficients for said block; quantizing said modified transform coefficients to form quantized transform coefficients; and encoding said quantized transform coefficients.

According to another embodiment, an apparatus for video decoding is provided, comprising one or more processors, wherein said one or more processors are configured to: access a set of transform kernels for a block of an image; decode an index into said set of transform kernels to indicate a transform kernel to be used for inverse secondary transform; de-quantize a block of transform coefficients; apply said transform kernel for inverse secondary transform to a subset of said de-quantized transform coefficients to form a block of transform coefficients for said block; apply inverse primary transform to said block of transform coefficients to obtain prediction residuals for said block; obtain a prediction block for said block based on an intra prediction mode; and reconstruct said block responsive to said prediction residuals and said prediction block. The apparatus may further comprise one or more memories coupled to said one or more processors.

According to another embodiment, an apparatus for video encoding is provided, comprising one or more processors, wherein said one or more processors are configured to: access a set of transform kernels for a block of an image; encode an index into said set of transform kernels to indicate a transform kernel to be used for secondary transform; obtain prediction residuals for said block based on an intra prediction mode; apply primary transform to said prediction residuals to form transform coefficients for said block; apply said transform kernel for secondary transform to a subset of said transform coefficients to modify said transform coefficients for said block; quantize said modified transform coefficients to form quantized transform coefficients; and encode said quantized transform coefficients.

According to another embodiment, a signal comprising encoded video is formed by performing: accessing a set of transform kernels for a block of an image; encoding an index into said set of transform kernels to indicate a transform kernel to be used for secondary transform; obtaining prediction residuals for said block based on an intra prediction mode; applying primary transform to said prediction residuals to form transform coefficients for said block; applying said transform kernel for secondary transform to a subset of said transform coefficients to modify said transform coefficients for said block; quantizing said modified transform coefficients to form quantized transform coefficients; and encoding said quantized transform coefficients.

## BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates location of secondary transform in JEM (Joint Exploration Model).

FIG. 5 illustrates reduced secondary transform in JEM.

FIG. 6 illustrates a number of processes in the decoder.

FIG. 7 illustrates the decoder-side operations of the RST (Reduced Secondary Transform) method currently adopted in VVC (Versatile Video Coding).

FIG. 8 illustrates the decoder-side operations when the RST is explicitly signaled, according to an embodiment.

## DETAILED DESCRIPTION

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV.Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

Video coding systems are widely used to compress digital video signals to reduce the storage need and/or transmission bandwidth of such signals. Among the various types of video coding systems, such as block-based, wavelet-based, and object-based systems, nowadays block-based hybrid video coding systems are the most widely used and deployed. Examples of block-based video coding systems include international video coding standards such as the MPEG-1/2/4 part 2, H.264/MPEG-4 part 10 AVC, VC-1, and the latest video coding standard called High Efficiency Video Coding (HEVC), which was developed by JCT-VC (Joint Collaborative Team on Video Coding) of ITU-T/SG16/Q.6/VCEG and ISO/IEC/MPEG.

The first version of the HEVC standard was finalized in January 2013, and offers approximately 50% bit-rate saving at equivalent perceptual quality compared to the prior generation video coding standard H.264/MPEG-4 AVC. Although the HEVC standard provides significant coding improvements over its predecessor, there is evidence that higher coding efficiency can be achieved with additional coding tools over HEVC. Based on that, both VCEG and MPEG started the exploration work of new coding technologies for future video coding standardization. In October 2015, ITU-T VCEG and ISO/IEC MPEG formed the Joint Video Exploration Team (JVET) to begin significant study of advanced technologies that could enable substantial enhancement of coding efficiency over HEVC. In the same month, a software codebase, called Joint Exploration Model (JEM) was established for future video coding exploration work. The JEM reference software was based on HEVC Test Model (HM) that was developed by JCT-VC for HEVC. Additional proposed coding tools may be integrated into the JEM software and tested using JVET common test conditions (CTCs).

**Block-based hybrid video coding**

Like the HEVC Test Model (HM), the Joint Exploration Model (JEM) software is also built upon the block-based hybrid video coding framework (200). FIG. 2 illustrates a block diagram of a block-based hybrid video encoding system. Note that in the present application, the terms "reconstructed" and "decoded" may be used interchangeably. Usually, but not necessarily, the term "reconstructed" is used at the encoder side while "decoded" is used at the decoder side.

Before being encoded, the video sequence may go through pre-processing, for example, applying a color transform to the input color picture (e.g., conversion from RGB 4:4:4 to YCbCr 4:2:0), or performing a remapping of the input picture components in order to get a signal distribution more resilient to compression (e.g., using a histogram equalization of one of the color components). Metadata may be associated with the pre-processing and attached to the bitstream.

The input video signal 202 is processed block by block. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors). In the present application, the term "block" can be used to refer to an array of data of various sizes, and it may be used to refer to a macroblock and a partition as specified in H.264/AVC, any of a coding tree unit (CTU), a coding unit (CU), a prediction unit (PU), a transform unit (TU), a coding block (CB), a prediction block (PB), and a transform block (TB) as in HEVC, a superblock or sub-partitioning in AVI, a CTU, CU, TU, CB, and TB as in VVC (Versatile Video Coding) or other video coding standards.

In HEVC, extended block sizes are used to efficiently compress high resolution (1080p and beyond) video signals. In HEVC, a CU can be up to 64x64 pixels. A CU can be further partitioned into prediction units, for which separate prediction methods are applied. For each input video block (MB or CU), spatial prediction (260) and/or temporal prediction (262) may be performed.

Spatial prediction (or "intra prediction") uses pixels of already-coded neighboring blocks (which are called reference samples) in the same video picture/slice to predict the current video block. Spatial prediction reduces spatial redundancy inherent in the video signal.

Temporal prediction (also referred to as "inter prediction" or "motion compensated prediction") uses reconstructed pixels from the already coded video pictures to predict the current video block. Temporal prediction reduces temporal redundancy inherent in the video signal. A temporal prediction signal for a given video block is usually signaled by one or more motion vectors which indicate the amount and the direction of motion between the current block and its reference block. Also, if multiple reference pictures are supported (as is the case for the recent video coding standards such as H.264/AVC or HEVC), then for each video block, its reference picture index is sent additionally; and the reference index is used to identify from which reference picture in the reference picture store (264) the temporal prediction signal comes.

After spatial and/or temporal prediction, the mode decision block (280) in the encoder chooses the best prediction mode, for example based on the rate-distortion optimization method. The prediction block is then subtracted from the current video block (216); and the prediction residual is de-correlated using transform (204) and quantized (206).

The encoder decodes an encoded block to provide a reference for further prediction. The quantized residual coefficients are inverse quantized (210) and inverse transformed (212) to form the reconstructed residual, which is then added back to the prediction block (226) to form the reconstructed video block.

The encoder may also skip the transform and apply quantization directly to the non-transformed residual signal. The encoder may also bypass both transform and quantization, i.e., the residual is coded directly without the application of the transform or quantization process. In direct pulse code modulation (PCM) coding, no prediction is applied and the coding unit samples are directly coded into the bitstream.

Further in-loop filtering such as de-blocking filter, SAO (Sample Adaptive Offset) filter and Adaptive Loop Filters may be applied (266) to the reconstructed video block before it is put in the reference picture store (264) and used to code future video blocks. To form the output video bitstream 220, coding mode (inter or intra), prediction mode information, motion information, and quantized residual coefficients are all sent to the entropy coding unit (208) to be further compressed and packed to form the bitstream.

FIG. 3 illustrates a general block diagram of a block-based video decoder (300). A video decoder generally performs a decoding pass reciprocal to the corresponding encoding pass, which performs video decoding as part of encoding video data. The video bitstream 302 is first unpacked and entropy decoded at entropy decoding unit 308. The coding mode and prediction information are sent to either the spatial prediction unit 360 (if intra coded) or the temporal prediction unit 362 (if inter coded) to form the prediction block. The residual transform coefficients are sent to inverse quantization unit 310 and inverse transform unit 312 to reconstruct the residual block. The prediction block and the residual block are then added together at 326. The reconstructed block may further go through in-loop filtering (366) before it is stored in reference picture store 364. The reconstructed video (320) in the reference picture store may then be stored, transmitted or used to drive a display device, as well as used to predict future video blocks.

The decoded picture may further go through post-processing, for example, an inverse color transform (e.g., conversion from YCbCr 4:2:0 to RGB 4:4:4) or an inverse remapping performing the inverse of the remapping process performed in the pre-encoding processing. The post-processing may use metadata derived in the pre-encoding processing and signaled in the bitstream.

Both HEVC and the JEM adhere to the block-based motion compensated hybrid video encoding/decoding workflows as shown in FIG. 2 and FIG. 3 and are based on the same functional modules such as spatial prediction (i.e., intra prediction), temporal prediction (i.e., inter prediction), transform, quantization, entropy coding and loop filters. However, several coding modules are further extended and improved. Some of these modules are described in the following.

**Adaptive multiple core transform**

In addition to DCT-II and DST-VII core transforms that are used in HEVC, an adaptive multiple transform (AMT) tool is used for coding the residuals of both inter and intra blocks in the JEM. Specifically, the AMT introduces four additional core transforms from the DCT/DST transform family, including DCT-VIII, DCT-V, DST-VII and DST-I. The AMT is applied to all the coding blocks whose width and height are no larger than 64, and a flag is signaled to indicate whether the AMT is enabled or not. When the flag is equal to 0, it indicates that DCT-II is used as the transform for the block; otherwise (i.e., the flag is equal to 1), three transform subsets (each containing two different AMT core transforms as specified in Table 1) are defined. When the AMT is applied to an intra block, a transform subset is firstly selected based on the intra prediction direction of the block. Then, two additional flags are signaled to indicate which transform (out of the two core transforms in the selected transform subset) is used as the horizontal transform and the vertical transform respectively. For inter blocks, only the transform subset #0, which consists of DCT-VIII and DST-VII, is used.

**Table 1. The three transform subsets defined in the JEM.**

| Transform subset No. | Core transforms |
|---|---|
| 0 | DST-VII, DCT-VIII |
| 1 | DST-VII, DST-I |
| 2 | DST-VII, DCT-V |

**Mode-dependent non-separable secondary transform**

As the correlation between spatial neighboring samples is generally less than that in the temporal domain, there are often strong correlations within the residual samples generated by intra prediction. To further improve intra coding efficiency, a tool called mode-dependent non-separable secondary transform (NSST) is applied in the JEM by applying non-separable transforms to transform coefficients of intra blocks. Because the correlation in residual samples often depends on the intra prediction mode, the secondary transform kernels are tuned for different intra prediction modes and signaling of the secondary transform kernels is also closely tied to the selected intra prediction mode.

Specifically, if both the width and the height of a block are no smaller than 8, an 8x8 non-separable transform is applied to the top-left 8x8 region of the 2D transform coefficient array of the block; otherwise (i.e., either the width or the height is equal to 4 which is the minimum coding block size in the JEM), a 4x4 non-separable transform is applied to the top-left region (in the size of min(8, W) x min(8, H)) of the transform coefficients of the block.

Secondary transform is applied between forward primary transform and quantization (at the encoder side), and between de-quantization and inverse primary transform (at the decoder side), as illustrated in FIG. 4. The primary transform is a separable 2D transform applied to residual data. In this figure, the squares represent 4x4 blocks of coefficients from the primary 2D separable transform. A subset of those coefficients is modified by use of a secondary transform.

For purposes of discussion consider the case where the secondary transform is applied to a single 4x4 block of transform coefficients of the primary transform. To illustrate the NSST, it assumes the input Xis one 4x4 block consisting of transform coefficients of the primary transform, which can be specified as

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix} \quad (4)$$

To apply the NSST, the input block is translated into one vector as

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T \quad (5)$$

Then, the NSST is applied by $\vec{F} = T \cdot \vec{X}$, where $\vec{F}$ indicates the transform coefficient vector, and $T$ is a 16x16 NSST transform matrix. The 16x1 coefficient vector $\vec{F}$ is re-organized as 4x4 block using the scanning order for that block (horizontal, vertical or diagonal). In the JEM, instead of using matrix multiplications, one hypercube-givens transform (HyGT) based on butterfly implementation is used to reduce the computational complexity of non-separable transform.

**Recent NSST development**

Recently, a simplified version of the NSST solution, called Reduced Secondary Transform (RST), was adopted into the VVC draft specification. RST maps an N dimensional vector to an R (R < N) dimensional vector in a different space. The core experiment on reduced secondary transform (see M. Koo, et al., "CE6: Reduced Secondary Transform (RST) (CE6-3.1)", JVET 14th Meeting: Geneva, CH, March 19-27, 2019, JVET-N0193, March 2019) is summarized in an article by X. Zhao, et al., entitled "CE6: Summary Report on Transforms and Transform Signaling", JVET 14th Meeting: Geneva, CH, March 19-27, 2019, JVET-N0026, March 2019, where it was recommended to adopt the method CE6-3.1d of JVET-N0193 "Adopt JVET-N0193, version from CE6-3.1d. CTC for AI and RA, not LB". A figure comparing the NSST from JEM and the proposed method from JVET-N0193 is shown in FIG. 5. The secondary transform is only applied on a subset of the top left block of 8x8 primary transform coefficients. The RST kernel is signaled through the intra prediction mode. Details of the adopted method are described below.

An RST matrix is chosen from four transform sets, each of which consists of two transforms (CE6-3.1a, CE6-3.1b, CE6-3.1c, and CE6-3.1d). Which transform set is applied is determined from intra prediction mode as the following:

1) If one of three CCLM (Cross-Component Linear Model) modes is indicated, transform set 0 is selected.

2) Otherwise, transform set selection is performed according to the following table, wherein intra prediction mode (IntraPredMode) 0 indicates the planar mode, intra prediction mode 1 indicates the DC mode, other intra prediction modes correspond to angular modes.

**Table 2 The transform set selection table**

| IntraPredMode | Transform set index |
|---|---|
| IntraPredMode < 0 | 1 |
| 0 ≤ IntraPredMode ≤ 1 | 0 |
| 2 ≤ IntraPredMode ≤ 12 | 1 |
| 13 ≤ IntraPredMode ≤ 23 | 2 |
| 24 ≤ IntraPredMode ≤ 44 | 3 |
| 45 ≤ IntraPredMode ≤ 55 | 2 |
| 56 ≤ IntraPredMode | 1 |

This signalling method relies on two aspects. First, one set of possible kernels is selected from possible four sets using information about the CCLM mode or intra prediction mode to derive the transform set index (TrSetIdx). The variable TrSetIdx ranges from 0-3 indicates the relevant set. The interpretation of TrSetIdx depends on intra prediction mode as shown in Table 2. Second, the value idxLFNST is transmitted to select between the transform kernels of the set indicated by TrSetIdx.

The dependency on the intra prediction mode limits the processing due to dependency of results. The intra prediction mode is not known at the decoder until the MPM (Most Probable Mode) process is executed and the signalled information is used by the MPM process to produce the intra prediction mode used for encoding. As shown in FIG. 6, the decoder may be divided into a number of processes: bitstream process (610), residual reconstruction process (620), prediction process (640) and reconstruction process (660). The bitstream process (610) handles entropy decoding (612) and parsing functions (614). Note the parsing process corresponds to the process of extracting the syntax elements from the bitstream. A syntax is an element of data represented in a bitstream. The semantics specify the meaning of the values of a syntax element. The semantics may further constrain the values a syntax element may choose from, and define variables, based on syntax elements, to be used in the decoding process. For each element, a descriptor is used in the syntax table to specify the applicable parsing process.

The residual reconstruction process (620) converts transform coefficients into residual pixel values. The prediction process (640) forms a prediction either from spatial neighbors already reconstructed in the current frame (645, 648), intra prediction, or from values in previously reconstructed frames (655, 658), inter prediction. The reconstruction (660) process adds the prediction and residual signals to produce a reconstructed value.

In prior video codecs, the residual reconstruction (620) and prediction processes (640) may operate independently. The residual reconstruction (620) receives quantizer information and transform coefficient levels from the entropy decoding (612) and parsing (614) module. This data is then dequantized (622) into blocks of transform coefficients. The residual reconstruction process applies (620) an inverse transform (624, 626) to these blocks of transform coefficients to calculate a residual signal. Independently, the prediction unit (640) receives prediction mode information either intra (645) or inter (655) from the entropy decoding and parsing processes. The prediction process then constructs a prediction signal from this information and previously reconstructed reference data. The reconstruction process (660) combines the output of the prediction process and the output of the residual reconstruction process to produce reconstructed pixel samples.

The MPM process (646) operates as a subset of the prediction process in the event that intra-frame prediction is signalled. The MPM process generates a list of likely intra-prediction modes and then selects a specific intra-prediction mode by combining this list and values resulting from entropy decoding and parsing.

The RST design also includes a transpose operation, exchanging the rows and columns, is applied along with the RST kernel under some conditions derived from the intra prediction mode. A transpose flag is used to indicate whether the transpose operation is applied. The transpose flag indicates if the data input to the RST kernel is flipped or not in the processing. When transpose is used, the encoder transposes the data prior to application of the RST. The decoder applies a second transpose to the data following the RST kernel calculation which undoes the first transpose operation. Thus, in addition to the use of the intra prediction mode to determine the RST kernel, the intra prediction mode is also used to control a transpose operation in the reconstruction process.

As an example, the results of equation (5) is modified by an initial transpose as shown in (6) and (7). Note the subscripts have been reversed in (7) compared to (5)

$$Transpose(X) = \begin{bmatrix} X_{00} & X_{10} & X_{20} & X_{30} \\ X_{01} & X_{11} & X_{21} & X_{31} \\ X_{02} & X_{12} & X_{22} & X_{32} \\ X_{03} & X_{13} & X_{23} & X_{33} \end{bmatrix} \quad (6)$$

The RST, is applied to one dimensional vector dervied from the transpose of this block of input

$$\overrightarrow{TX} = [X_{00} \quad X_{10} \quad X_{20} \quad X_{30} \quad X_{01} \quad X_{11} \quad X_{21} \quad X_{31} \quad X_{02} \quad X_{12} \quad X_{22} \quad X_{32} \quad X_{03} \quad X_{13} \quad X_{23} \quad X_{33}]^T \quad (7)$$

With the RST design noted above, the residual reconstruction process cannot proceed independently from the prediction process due to the low-level dependency introduced by having the kernel used in the residual reconstruction (620) of RST depend on the intra prediction mode used within the prediction process (640). Here, the intra-prediction mode must be determined via the MPM process used in the prediction process (640) before the kernel used in the residual construction (620) of RST can be determined. This low-level dependency, the requirement to determine and use MPM in addition to bitstream parsing, forces the RST residual process to occur after the MPM process of (640).

There are some contributions on removing or reducing the dependency of the RST kernel signaling on the intra prediction mode. The dependence of the binarization of nsst_mode upon intra prediction mode was described in an article by C. Rosewarne, et al., entitled "CE6-related: RST binarisation", JVET 14th Meeting: Geneva, CH, March 19-27, 2019, JVET-N0105, March 2019. This method was adopted on top of the previously mentioned RST adoption as a step toward reducing low-level dependency of the NSST kernel selection on intra prediction mode. In particular, the context selection dependency of syntax element nsst_mode on the intra prediction mode is removed, and bypass coding is used for the second bin of nsst_mode. A contribution (see J. Yao, et al., "CE3-3.5: Explicitly signal non-angular modes in intra mode coding", JVET 14th Meeting: Geneva, CH, March 19-27, 2019, JVET-N0104, March 2019.) proposed to explicitly signal the intra prediction mode rather than using the MPM mode derivation process. The explicit signalling of JVET-N0104 was not adopted though some explicit signalling was adopted from a contribution by B. Wang, et al., entitled "CE3-related: A unified MPM list for intra mode coding", JVET-N0185, March 2019. This explicitly signalling for planar intra prediction mode was adopted "Decision: Adopt JVET-N0185, with modification such that a planar mode flag".

In particular, to explicitly signal non-angular intra prediction modes in the current VTM, a syntax (intra_luma_non_ang_flag) is used to indicate whether the intra mode is angular or non-angular not. For non-angular modes (planar, DC), a syntax (intra_luma_not_planar_flag) is signaled to indicate whether the intra prediction mode is planar or DC. For angular modes, the MPM list is used and is derived only using angular modes which is the same as the one currently being used for non-zero reference line index in VTM.

When the value of the intra prediction mode, planar mode for example, is explicitly signalled, the determination of kernel value use with the RST no longer relies on the derivation of that intra prediction mode through the MPM process. In this case, the explicitly signalled intra prediction mode does not introduce dependency of the RST kernel on the low-level MPM process. If explicitly signaling is not done for all intra prediction modes, i.e., non-planar mode, this low-level dependency remains for intra prediction modes which are not explicitly signalled.

FIG. 7 illustrates the decoder-side operations of the RST method (JVET-N0193) currently adopted in VVC. At step 705, the decoder decodes syntax element intra_luma_not_planar_flag for the current block. If intra_luma_not_planar_flag is 0 (710), the intra prediction mode for luma is set (730) to planar. Otherwise, if the luma intra prediction mode is not planar, an MPM list is built (715) for the current block. At step 720, the decoder decodes syntax element intra_luma_mpm_flag. If the intra_luma_mpm_flag is true (i.e., the intra prediction mode is selected from the MPM list, 725), the decoder decodes (740) syntax element intra_luma_mpm_idx, an index indicating which intra prediction mode in the MPM list is used for the current block. Otherwise, if the intra prediction mode is not selected from the MPM list, the decoder decodes (735) syntax element intra_luma_mpm_remainder, an index indicating which intra prediction mode in the remaining list is used for the current block. At step 745, the intra prediction mode is obtained for decoding the current block. Given the intra prediction mode, an RST transform set can be determined (760) from the available transform sets, for example, according to Table 2.

At step 750, the kernel index in the selected transform set is decoded. Given the kernel index, the RST transform kernel is determined (765). At step 770, the residual coefficients are decoded. Applying (775) the RST transform kernel, the results for inverse secondary transform are obtained. At step 755, ZeroOutSize is computed. The ZeroOutSize controls the number of coefficients which are set to value zero following the application of the kernel. At step 777, a subset of coefficients is set to zero based on the value of ZeroOutSize. At step 780, a transpose flag is determined based on the intra prediction mode. If the transpose flag is true (785), the results from the inverse secondary transform are transposed (790). At step 795, the inverse primary transform is applied.

The derivation of ZeroOutSize and the available transform sets are known at the encoder and decoder. At the encoder side, for a transform set selected based on the intra prediction mode, the kernel index into the selected transform set is encoded into the bitstream.

As described above, a concern with the RST method (JVET-N0193) currently adopted in VVC is that the signaling of the RST kernel involves the intra prediction mode. The RST specifies a particular kernel from both the transform unit size and the spatial intra prediction mode used in the current CU and an additional index which selects between two possible kernels for a given size and intra prediction mode. Often the intra prediction mode is not signaled directly but derived at a low-level part of the intra prediction process. Since the block size and intra prediction mode information are available at the decoder, in principle, only the additional index selecting between two possible kernels needs to be signaled. In the adopted RST, the parsing of additional transform kernel index for luma/chroma component depends on the intra prediction mode of luma/chroma component, and the intra prediction mode information usually is inferred in the reconstruction stage. In practical decoder design, the parsing stage and reconstruction stage are usually separated and processed in parallel to maximize the decoding throughput. The parsing stage depending on the reconstruction stage will reduce the throughput and it needs to be avoided as much as possible.

As noted in the recent updates related to RST, some of the low-level linkage between RST kernel and intra prediction modes has been eliminated but dependency on MPM and intra prediction mode remains. The challenge is to eliminate this low-level dependency of the RST kernel selection on the intra prediction mode while limiting the signaling overhead. Explicitly signaling the RST kernel removes the dependency but introduces overhead due to the signaling of the kernel information rather than deriving the RST kernel from other data that was already signalled as is done with the RST design noted. The motivation of the present embodiments is to eliminate the dependency in exchange for possible redundancy. It is possible to signal a different kernel than would be derived so in this case it is not fully redundant although in practice the values signalled will be those that could have been derived.

The proposed techniques remove the low-level dependency by explicitly signalling the RST kernel or information sufficient to derive the kernel without the need for dependency on intra prediction mode. The overhead of signaling the kernel compared to directly signalling the kernel may be reduced by several methods.

FIG. 8 illustrate an example method of decoding a current block, according to an embodiment. In this embodiment, rather than using a transform set index (TrSetIndex) to indicate the selected transform set and another index (idxLFNST) to indicate the transform kernel selected from the selected transform set, a single index (a kernel index) is used to indicate the transform kernel selected from a set of possible kernels. In one example, the set of possible kernels contains 4 or 5 transform kernels, which are known at both the encoder and decoder and may vary with the block size. That is, the selection of the transform set is eliminated by explicitly signalling the kernel values rather than selecting from a set determined through use of the intra-prediction mode.

Specifically, at step 810, the decoder decodes syntax element indicating whether the current block uses the planar mode, intra_luma_not_planar_flag. If intra_luma_not_planar_flag is 0 (planar mode is used, 820), the RST kernel index (rst_kernel_idx) is set (830) to a default value and the RST transpose flag (rst_transpose_flag) is set (835) to false. Otherwise, if the luma intra prediction mode is not planar, the RST kernel index is decoded (840) and the RST transpose flag is decoded (845).

Given the RST kernel index, the RST transform kernel is determined (850). At step 870, the residual coefficients are decoded. Applying (875), the RST transform kernel, the results for inverse secondary transform are obtained. At step 860, a ZeroOutSize is computed. The ZeroOutSize may control the number of coefficients set to zero following the application of a transform kernel. At step 877, a subset of coefficients is set to zero based on the value of ZeroOutSize. If the transpose flag is true (880), the results from the inverse secondary transform are transposed (885). At step 890, the inverse primary transform is applied.

At the encoder side, the same set of possible transform kernels is known as the decoder. For a transform kernel to be used, the kernel index into the list of transform kernels is encoded into the bitstream.

In this embodiment, the explicit signalling planar prediction mode may be used to directly infer the transform kernel without need of signaling the RST kernel set or deriving the kernel set from low-level information i.e., following MPM construction. The intra prediction mode is coded with two parts. The first part is a flag to indicate the current intra prediction mode is planar or not. If it is not planar mode, the prediction mode will be signalled with the MPM list: a flag is to indicate the prediction is in the MPM list or not. If it is in the MPM list, an additional index is coded to indicate the mode in the MPM list. If it is not in MPM list, the mode is coded explicitly. In the method of JVET-N0193, the context construction for transform kernel index in RST needs to differentiate between the states when the current intra prediction mode is angular mode or non-angular mode. Non-angular mode includes planar mode and DC mode. The solution is to change this condition to whether current prediction mode is planar mode or non-planar mode, which is known immediately after the intra prediction mode is parsed rather than the present method which uses the angular or non-angular distinction which is not immediately available without determining the actual intra prediction mode. Specifically, the transform index will use different context for planar mode and non-planar mode. The context derivation used for coding this index, st_idx, is quoted below from the proposed text of JVET-N0193.

The variable intraModeCtx is derived as follows:

- If cIdx is equal to 0, intraModeCtx is derived as follows:

$$\text{intraModeCtx} = (\ \text{IntraPredModeY}[\ x0\ ][\ y0\ ] <= 1\ )\ ?\ 1 : 0$$

- Otherwise (cIdx is greater than 0), intraModeCtx is derived as follows:

$$\text{intraModeCtx} = (\ \text{intra_chroma_pred_mode}[\ x0\ ][\ y0\ ] >= 4\ )\ ?\ 1 : 0$$

Note that in this description, the variable intraModeCtx, which is used to derive the context used to encode st_idx, depends on either the IntraPredModeY or the intra_chroma_pred_mode depending upon the color component cIdx. For chroma, intra_chroma_pred_mode is available immediately at parsing time while for luma IntraPredModeY is not immediately available. The proposal is to replace this use of IntraPredModeY by the planar mode flag in embodiments when this flag is immediately available at parsing time. With this change in context derivation, this low-level dependency is removed. Therefore, the parsing of transform index does not depend on MPM list construction and intra prediction. The above context derivation for luma component (cIdx = 0) may be changed as follows:

$$\text{intraModeCtx} = (\ \text{intra_luma_not_planar_flag}\ )\ ?\ 0 : 1$$

In one embodiment, the binarization of the RST kernel index is designed to be consistent with the probability of RST kernel occurrence. This binarization may include information about the presence of planar mode such that this signal is only used in the subset of cases where planar intra-prediction mode is not signaled in which case the restricted probability should be used in determining the ordering of RST kernel values used for binarization order, which refers to the order of indexes in converting values to binarized values. Most probably should be first and least probably last.

In one embodiment, context-based arithmetic coding of the RST kernel index may be used wherein the context depends upon coding unit size, and explicitly signaled information but not the low-level derived information such as intra prediction mode which depends on MPM construction.

In one embodiment, the indices of RST kernels signaled in neighboring CUs may be used to construct a predictor for the RST kernel index of the current CU. A most probable kernel index may be produced based on this prediction from neighboring kernel values. The RST kernel of the current CU may be reconstructed from the indices of RST kernels of neighboring CUs as well as from signaled information without needing to reconstruct the intra prediction mode via MPM.

In one embodiment, the transpose flag is derived from the signaled RST kernel index and information available at the level of entropy decoding rather than from the low-level intra prediction mode.

As described above, because the correlation may be strong and differ for different intra-prediction modes in the residual samples generated by intra prediction, secondary transform is applied to transform coefficients from the primary transform to reduce this correlation thereby increasing compression. The secondary transform kernels are usually tuned for different intra prediction modes. In the current design, recognizing the relation between transform kernel and intra prediction mode, the signaling of secondary transform kernel relies on the intra prediction mode of the block. However, this causes dependency of parsing secondary transform kernel index on the intra prediction modes as illustrated in FIG. 6. To remove such parsing dependency, the present embodiments propose to pre-determine a list of transform kernels, which may vary with the block size. To signal which transform kernel is used, the encoder only needs to signal a kernel index into the list of transform kernels. The entropy coding (e.g., context selection) of the kernel index may depend on an explicit signaled intra prediction mode, but will be independent of the MPM process, thus maintaining the parsing independence from the low-level process (e.g., MPM process).

An example of a section of the syntax needed to signal the RST kernel is illustrated in Table 3. Semantics of the syntax elements is given below. This is used as part of communicating the RST to the decoder when intra prediction is used and the rst_mode is active indicating the use of a secondary transform. Note the use of planar prediction mode is signalled. When the planar prediction mode is used, the RST kernel is known and the rst_transpose_flag is unused, defaults to 0. When rst_mode is active and planar prediction mode is not used, two additional parameters are signalled to specify the RST kernel used and indicate if a transpose operation is used in the RST calculation.

**Table 3. syntax for signaling RST kernel**

| | |
|---|---|
| if( CuPredMode[ x0 ][ y0 ] = = MODE_INTRA ) { | |
| **intra_luma_not_planar_flag** [ x0 ][ y0 ] | ae(v) |
| **rst_mode_flag**[ x0 ][ y0 ] | ae(v) |
| } | |
| if( rst_mode_flag[ x0 ][ y0 ] ) { | |
| if( !intra_luma_not_planar_flag [ x0 ][ y0 ]) { | |
| **rst_kernel_idx** [ x0 ] y0 ] | ae(v) |
| **rst_transpose_flag** [ x0 ][ y0 ] | ae(v) |
| } | |
| } | |

**intra_luma_not_planar_flag** indicates the intra prediction mode for a block is not planar prediction. This is only used with intra-coded blocks and hence the flag is sent only when the current prediction mode is intra. This flag is assigned the value 0 when not present in the bitstream.
**rst_mode_flag** indicates the use of reduced secondary transform. This is only used with intra-coded blocks and hence the flag is sent only when the current prediction mode is intra. This flag is assigned the value 0 when not present in the bitstream. An alternate embodiment could always use RST mode for intra coding and hence the value of rst_mode_flag would be given by CuPredMode[x0][y0]= = MODE_INTRA.
**rst_kernel_idx** specifies the index of the RST kernel to use for the given block. This is only needed when the value of rst_mode_flag is one and the value of intra_luma_not_planar_flag is zero.
**rst_transpose_flag** indicates the use of a transpose operation in the RST calculation. This flag is assigned the value 0 when not present in the bitstream.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the entropy encoding and decoding modules (208, 308), of a video encoder 200 and decoder 300 as shown in FIG. 2 and FIG. 3. Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

According to an embodiment, a method of video decoding is provided, comprising: accessing a set of transform kernels for a block of an image; decoding an index into said set of transform kernels to indicate a transform kernel to be used for inverse secondary transform; de-quantizing a block of transform coefficients; applying said transform kernel for inverse secondary transform to a subset of said de-quantized transform coefficients to form a block of transform coefficients for said block; applying inverse primary transform to said block of transform coefficients to obtain prediction residuals for said block; obtaining a prediction block for said block based on an intra prediction mode; and reconstructing said block responsive to said prediction residuals and said prediction block.

According to an embodiment, a method of video encoding is provided, comprising: accessing a set of transform kernels for a block of an image; encoding an index into said set of transform kernels to indicate a transform kernel to be used for secondary transform; obtaining prediction residuals for said block based on an intra prediction mode; applying primary transform to said prediction residuals to form transform coefficients for said block; applying said transform kernel for secondary transform to a subset of said transform coefficients to modify said transform coefficients for said block; quantizing said modified transform coefficients to form quantized transform coefficients; and encoding said quantized transform coefficients.

According to another embodiment, an apparatus for video decoding is provided, comprising one or more processors, wherein said one or more processors are configured to: access a set of transform kernels for a block of an image; decode an index into said set of transform kernels to indicate a transform kernel to be used for inverse secondary transform; de-quantize a block of transform coefficients; apply said transform kernel for inverse secondary transform to a subset of said de-quantized transform coefficients to form a block of transform coefficients for said block; apply inverse primary transform to said block of transform coefficients to obtain prediction residuals for said block; obtain a prediction block for said block based on an intra prediction mode; and reconstruct said block responsive to said prediction residuals and said prediction block. The apparatus may further comprise one or more memories coupled to said one or more processors.

According to another embodiment, an apparatus for video encoding is provided, comprising one or more processors, wherein said one or more processors are configured to: access a set of transform kernels for a block of an image; encode an index into said set of transform kernels to indicate a transform kernel to be used for secondary transform; obtain prediction residuals for said block based on an intra prediction mode; apply primary transform to said prediction residuals to form transform coefficients for said block; apply said transform kernel for secondary transform to a subset of said transform coefficients to modify said transform coefficients for said block; quantize said modified transform coefficients to form quantized transform coefficients; and encode said quantized transform coefficients.

According to another embodiment, a signal comprising encoded video is formed by performing: accessing a set of transform kernels for a block of an image; encoding an index into said set of transform kernels to indicate a transform kernel to be used for secondary transform; obtaining prediction residuals for said block based on an intra prediction mode; applying primary transform to said prediction residuals to form transform coefficients for said block; applying said transform kernel for secondary transform to a subset of said transform coefficients to modify said transform coefficients for said block; quantizing said modified transform coefficients to form quantized transform coefficients; and encoding said quantized transform coefficients.

According to an embodiment, a context is determined based on explicitly signaled information; and said index, indicating said transform kernel for secondary transform, is entropy encoded or decoded based on said determined context.

According to an embodiment, said explicitly signaled information corresponds to a syntax flag explicitly signaling whether a planar intra prediction mode is used or not for intra prediction.

According to an embodiment, a single index is used to indicate said transform kernel for secondary transform.

According to an embodiment, said entropy encoding or decoding an index is independent of low-level derived information. In one example, said entropy encoding an index is independent of MPM (Most Probable Mode) derivation process.

In one embodiment, binarization of said index is based on probability of transform kernel occurrence.

In one embodiment, said context is further based on a size of said block.

In one embodiment, a predictor is constructed for said index based on one or more indices used for secondary transform for neighboring blocks, wherein said index is encoded or decoded based on said constructed predictor.

In one embodiment, said predictor for said index corresponds to a most probable index.

In one embodiment, a transpose flag is derived from said index, independently of low-level derived information.

An embodiment provides a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding video data according to the methods described above. One or more embodiments also provide a computer readable storage medium having stored thereon a bitstream generated according to the methods described above. One or more embodiments also provide a method and apparatus for transmitting or receiving the bitstream generated according to the methods described above.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein, for example, syntax used to indicate the RST kernel index and to indicate whether the planar intra prediction mode is used or not, are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals the number of pieces in the piece-wise linear model to the decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video encoding, comprising:

    accessing a set of transform kernels for a block of an image;
    encoding an index into said set of transform kernels to indicate a transform kernel to be used for secondary transform;
    obtaining prediction residuals for said block based on an intra prediction mode;
    applying primary transform to said prediction residuals to form transform coefficients for said block;
    applying said transform kernel for secondary transform to a subset of said transform coefficients to modify said transform coefficients for said block;
    quantizing said modified transform coefficients to form quantized transform coefficients; and
    encoding said quantized transform coefficients.

2. A method for video decoding, comprising:

    accessing a set of transform kernels for a block of an image;
    decoding an index into said set of transform kernels to indicate a transform kernel to be used for inverse secondary transform;
    de-quantizing a block of transform coefficients;
    applying said transform kernel for inverse secondary transform to a subset of said de-quantized transform coefficients to form a block of transform coefficients for said block;
    applying inverse primary transform to said block of transform coefficients to obtain prediction residuals for said block;
    obtaining a prediction block for said block based on an intra prediction mode; and
    reconstructing said block responsive to said prediction residuals and said prediction block.

3. An apparatus for video encoding, comprising at least one processor configured to:

    access a set of transform kernels for a block of an image;
    encode an index into said set of transform kernels to indicate a transform kernel to be used for secondary transform;
    obtain prediction residuals for said block based on an intra prediction mode;
    apply primary transform to said prediction residuals to form transform coefficients for said block;
    apply said transform kernel for secondary transform to a subset of said transform coefficients to modify said transform coefficients for said block;
    quantize said modified transform coefficients to form quantized transform coefficients; and
    encode said quantized transform coefficients.

4. An apparatus for video decoding, comprising at least one processor configured to:

    access a set of transform kernels for a block of an image;
    decode an index into said set of transform kernels to indicate a transform kernel to be used for inverse secondary transform;
    de-quantize a block of transform coefficients;
    apply said transform kernel for inverse secondary transform to a subset of said de-quantized transform coefficients to form a block of transform coefficients for said block;
    apply inverse primary transform to said block of transform coefficients to obtain prediction residuals for said block;
    obtain a prediction block for said block based on an intra prediction mode; and
    reconstruct said block responsive to said prediction residuals and said prediction block.

5. The method of claim 1 or 2, further comprising, or the apparatus of claim 3 or 4, further configured to perform:

    determining a context based on explicitly signaled information;
    entropy encoding or decoding said index indicating said transform kernel, based on said determined context.

6. The method of claim 5, or the apparatus of claim 5, wherein said explicitly signaled information corresponds to a syntax flag explicitly signaling whether a planar intra prediction mode is used or not for intra prediction.

**7.** The method of any one of claims 1, 2 and 5-6, or the apparatus of any one of claims 3-6, wherein a single index is used to indicate said transform kernel.

**8.** The method of any one of claims 1, 2 and 5-7, or the apparatus of any one of claims 3-7, wherein said entropy encoding or decoding an index is independent of low-level derived information.

**9.** The method of claim 8, or the apparatus of claim 8, wherein said entropy encoding or decoding an index is independent of MPM (Most Probable Mode) derivation process.

**10.** The method of any one of claims 1, 2 and 5-9, or the apparatus of any one of claims 3-9, wherein binarization of said index is based on probability of transform kernel occurrence.

**11.** The method of any one of claims 1, 2 and 5-10, or the apparatus of any one of claims 3-10, wherein said context is further based on a size of said block.

**12.** The method of any one of claims 1, 2 and 5-11, further comprising, or the apparatus of any one of claims 3-11, further configured to perform:
constructing a predictor for said index based on one or more indices used for secondary transform for neighboring blocks, wherein said index is encoded or decoded based on said predictor.

**13.** The method of claim 12, or the apparatus of claim 12, wherein said predictor for said index corresponds to a most probable index.

**14.** The method of any one of claims 1, 2 and 5-13, or the apparatus of any one of claims 3-13, wherein a transpose flag is derived from said index, independently of low-level derived information.

**15.** A signal comprising encoded video, formed by performing:

accessing a set of transform kernels for a block of an image;
encoding an index into said set of transform kernels to indicate a transform kernel to be used for a secondary transform;
obtaining prediction residuals for said block based on an intra prediction mode;
applying primary transform to said prediction residuals to form transform coefficients for said block;
applying said transform kernel for secondary transform to a subset of said transform coefficients to modify said transform coefficients for said block;
quantizing said modified transform coefficients to form quantized transform coefficients; and
encoding said quantized transform coefficients.

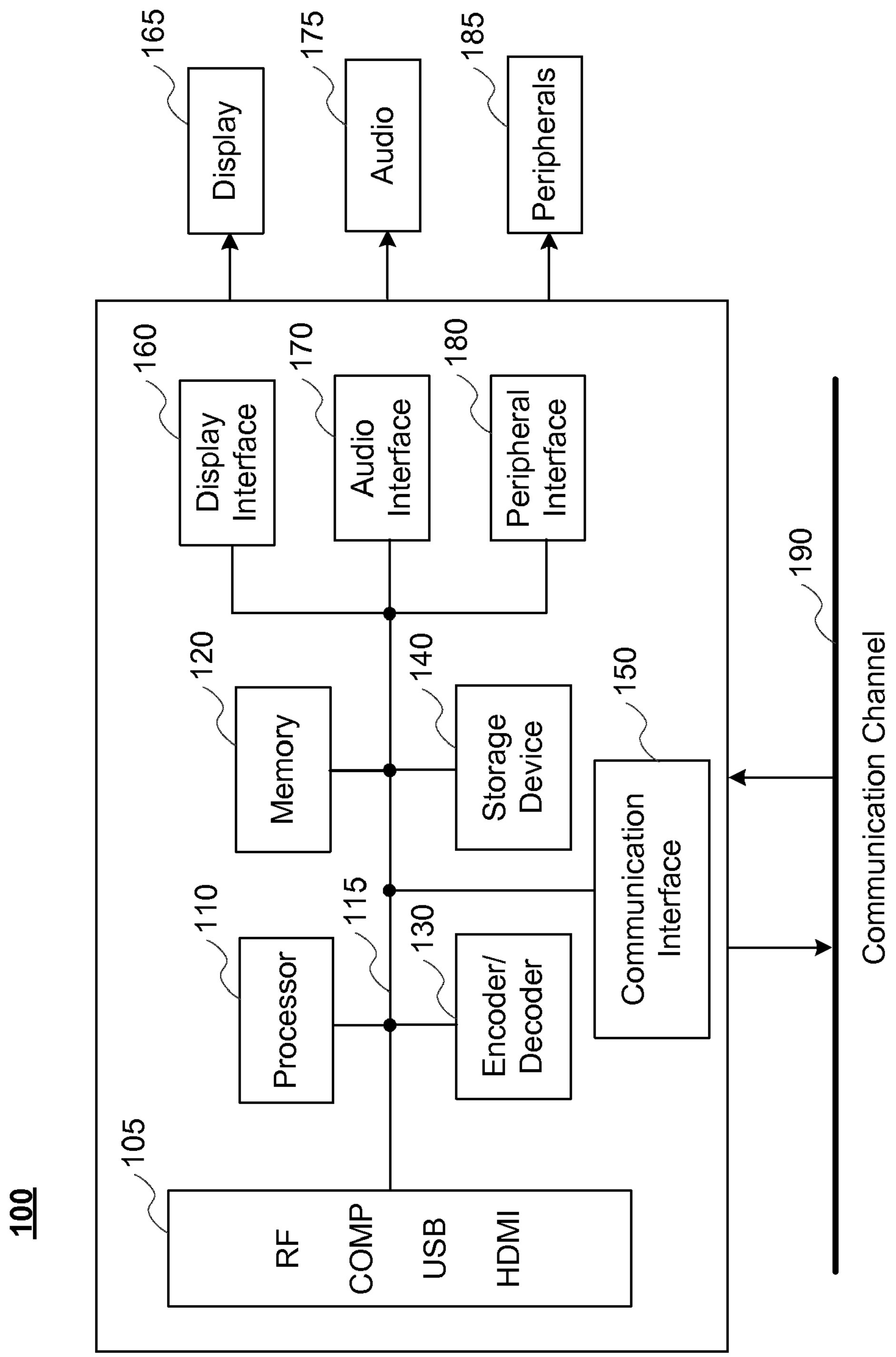
100
105
RF
COMP
USB
HDMI
110
Processor
115
130
Encoder/
Decoder
120
Memory
140
Storage
Device
150
Communication
Interface
160
Display
Interface
170
Audio
Interface
180
Peripheral
Interface
165
Display
175
Audio
185
Peripherals
190
Communication Channel

FIG. 1

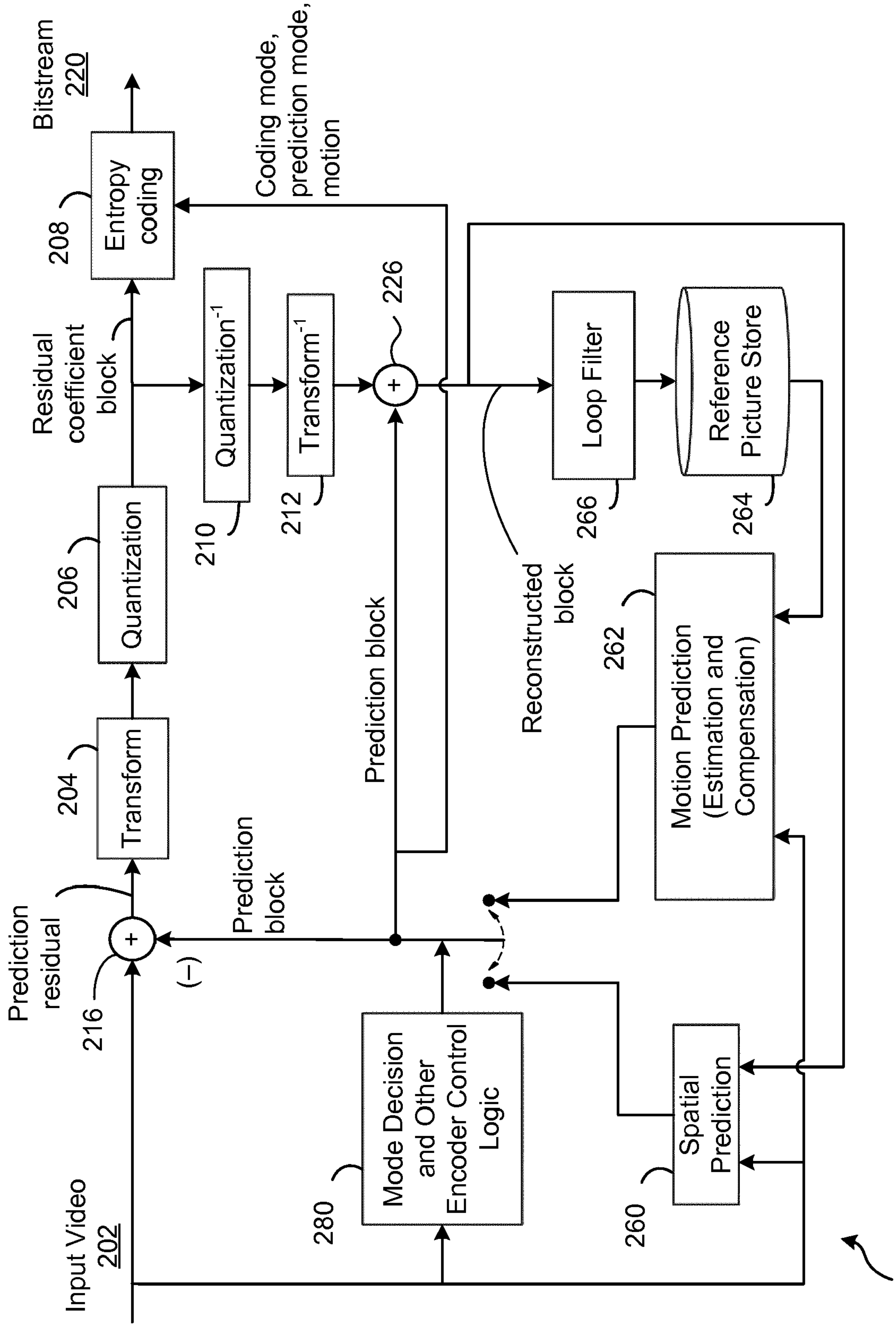
Input Video 202
Prediction residual
216
(−)
+
Prediction block
Transform
204
Quantization
206
Residual coefficient block
Entropy coding
208
Bitstream 220
Coding mode, prediction mode, motion
Quantization-1
210
Transform-1
212
226
Prediction block
Reconstructed block
Loop Filter
266
Reference Picture Store
264
Motion Prediction (Estimation and Compensation)
262
Mode Decision and Other Encoder Control Logic
280
Spatial Prediction
260
200

FIG. 2

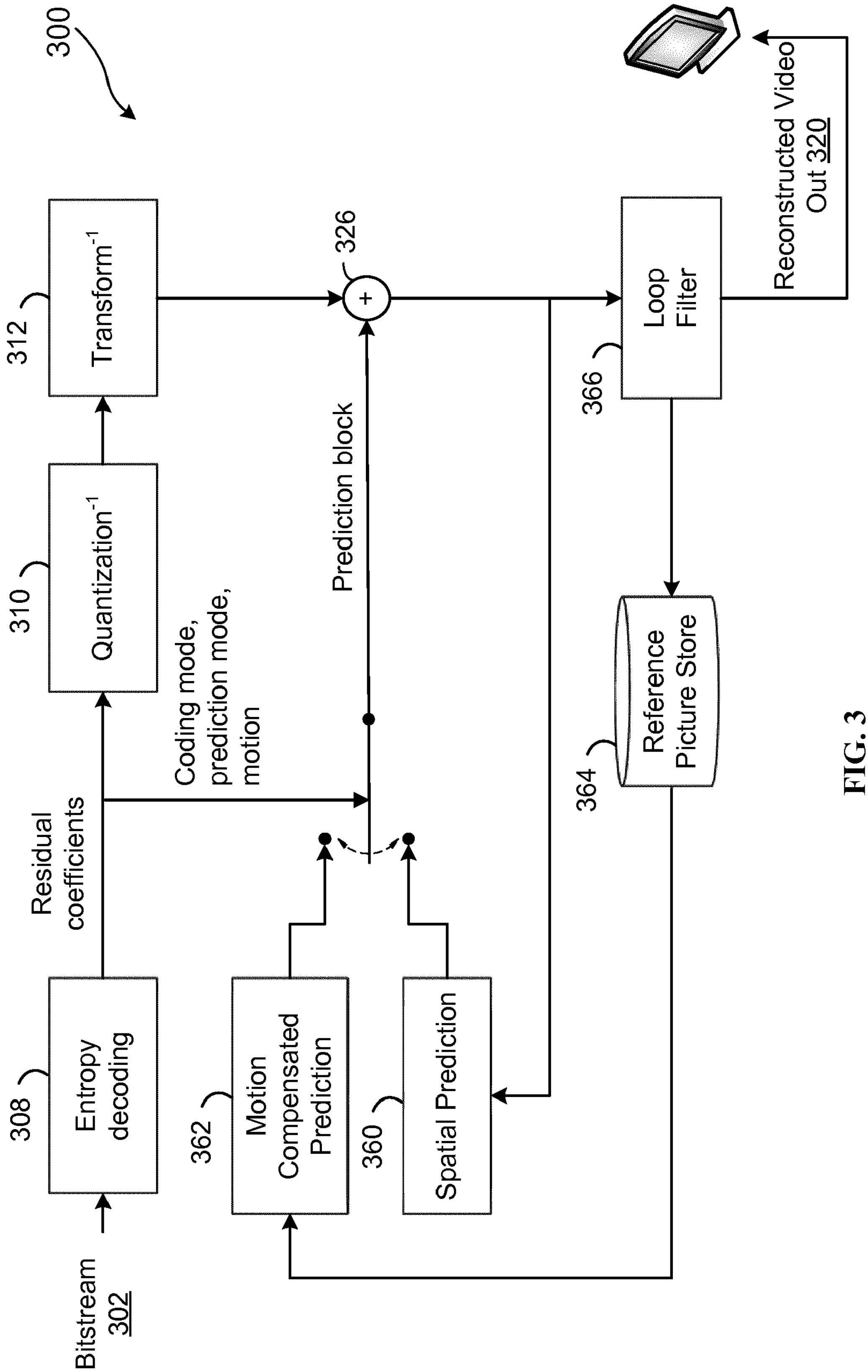
300
Bitstream 302
308
Entropy decoding
Residual coefficients
310
Quantization-1
312
Transform-1
Coding mode, prediction mode, motion
Prediction block
326
+
362
Motion Compensated Prediction
360
Spatial Prediction
364
Reference Picture Store
366
Loop Filter
Reconstructed Video Out 320

FIG. 3

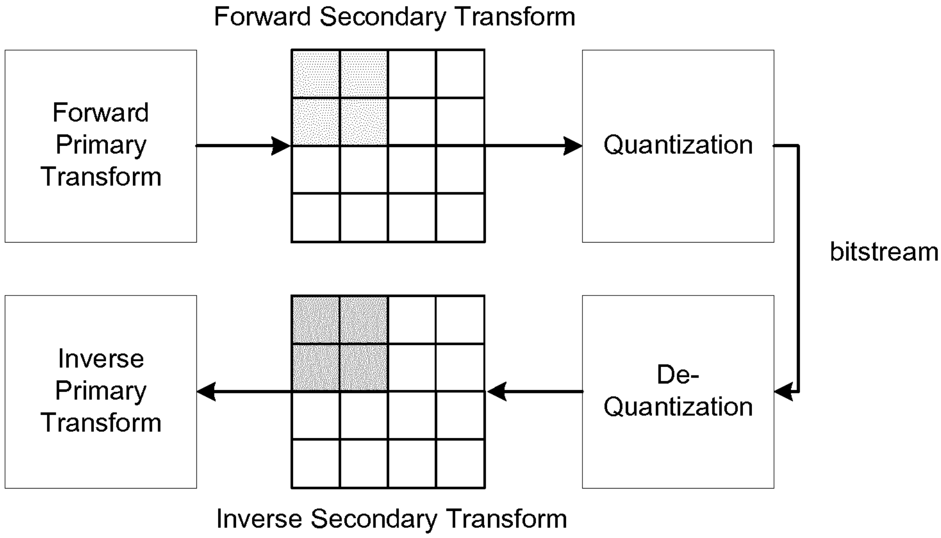
Forward Secondary Transform
Forward Primary Transform
Quantization
bitstream
Inverse Primary Transform
De-Quantization
Inverse Secondary Transform

FIG. 4

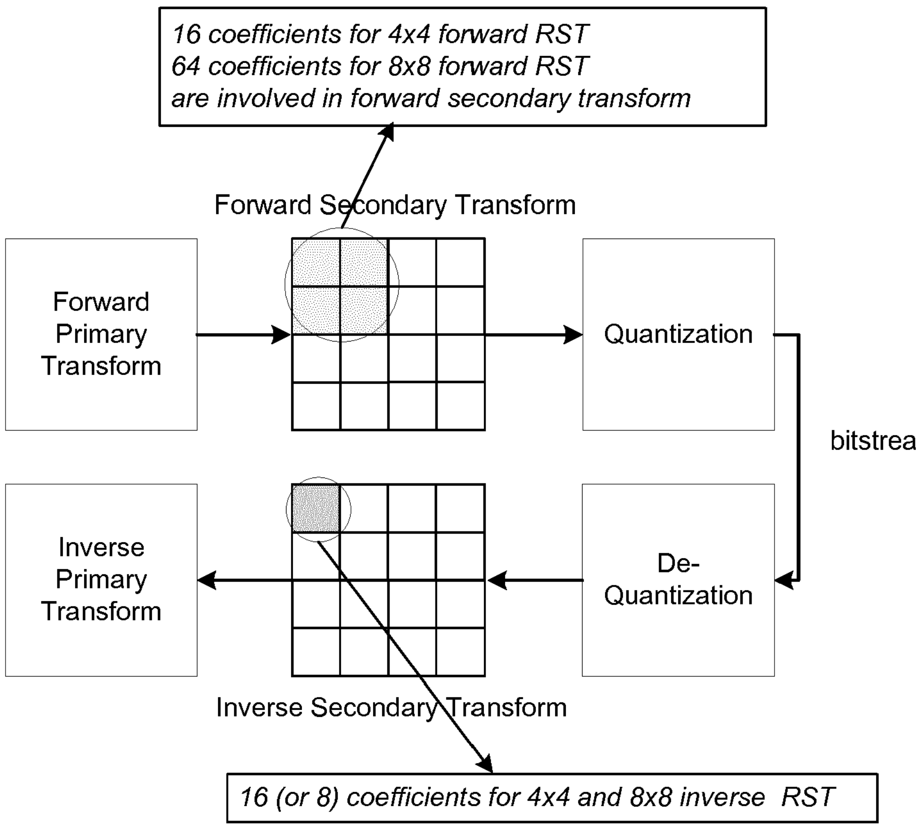
16 coefficients for 4x4 forward RST
64 coefficients for 8x8 forward RST
are involved in forward secondary transform
Forward Secondary Transform
Forward Primary Transform
Quantization
bitstream
Inverse Primary Transform
De-Quantization
Inverse Secondary Transform
16 (or 8) coefficients for 4x4 and 8x8 inverse RST

FIG. 5

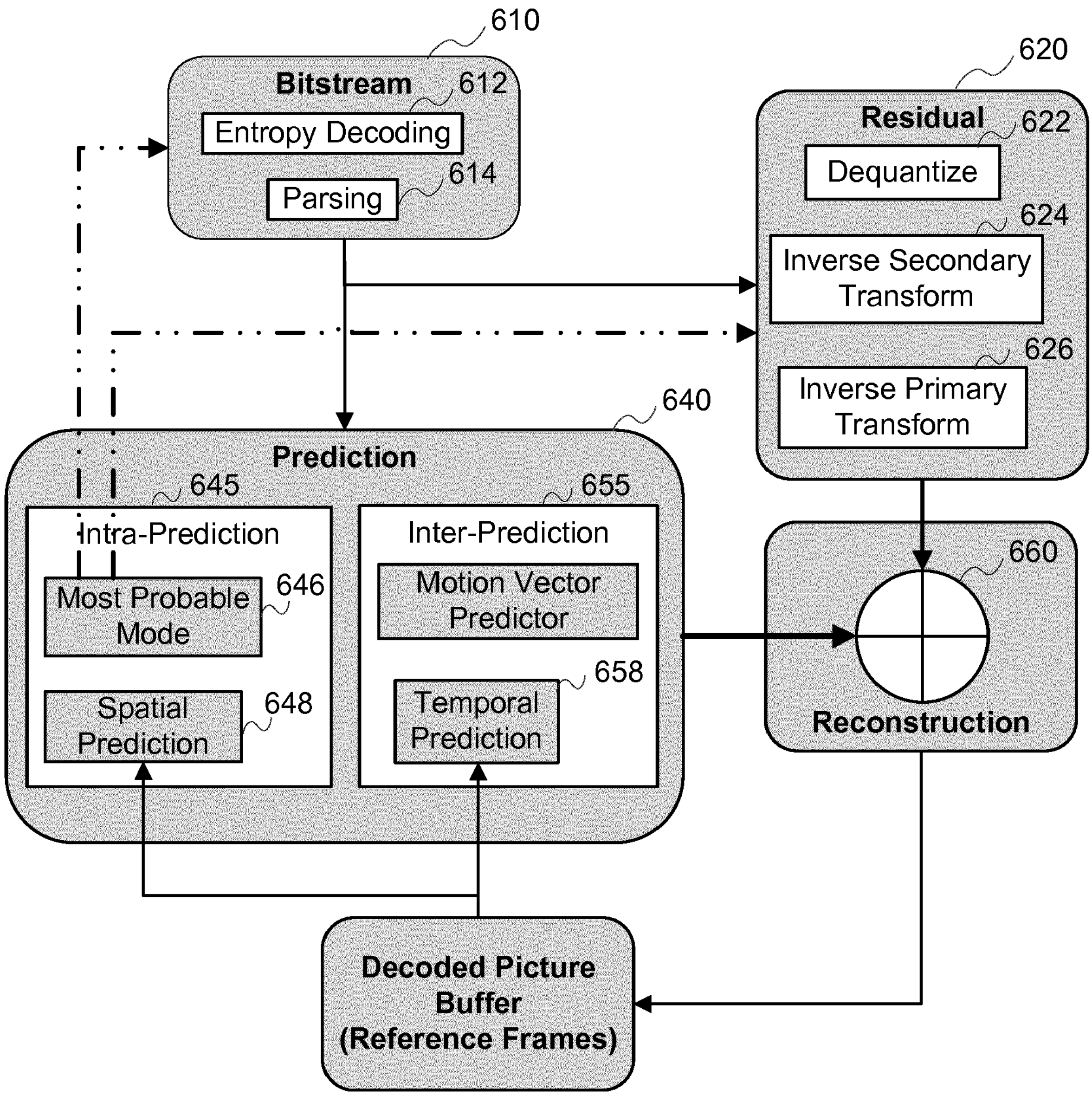
610
Bitstream
612
Entropy Decoding
614
Parsing
620
Residual
622
Dequantize
624
Inverse Secondary Transform
626
Inverse Primary Transform
640
Prediction
645
Intra-Prediction
646
Most Probable Mode
648
Spatial Prediction
655
Inter-Prediction
Motion Vector Predictor
658
Temporal Prediction
660
Reconstruction
Decoded Picture Buffer (Reference Frames)

FIG. 6

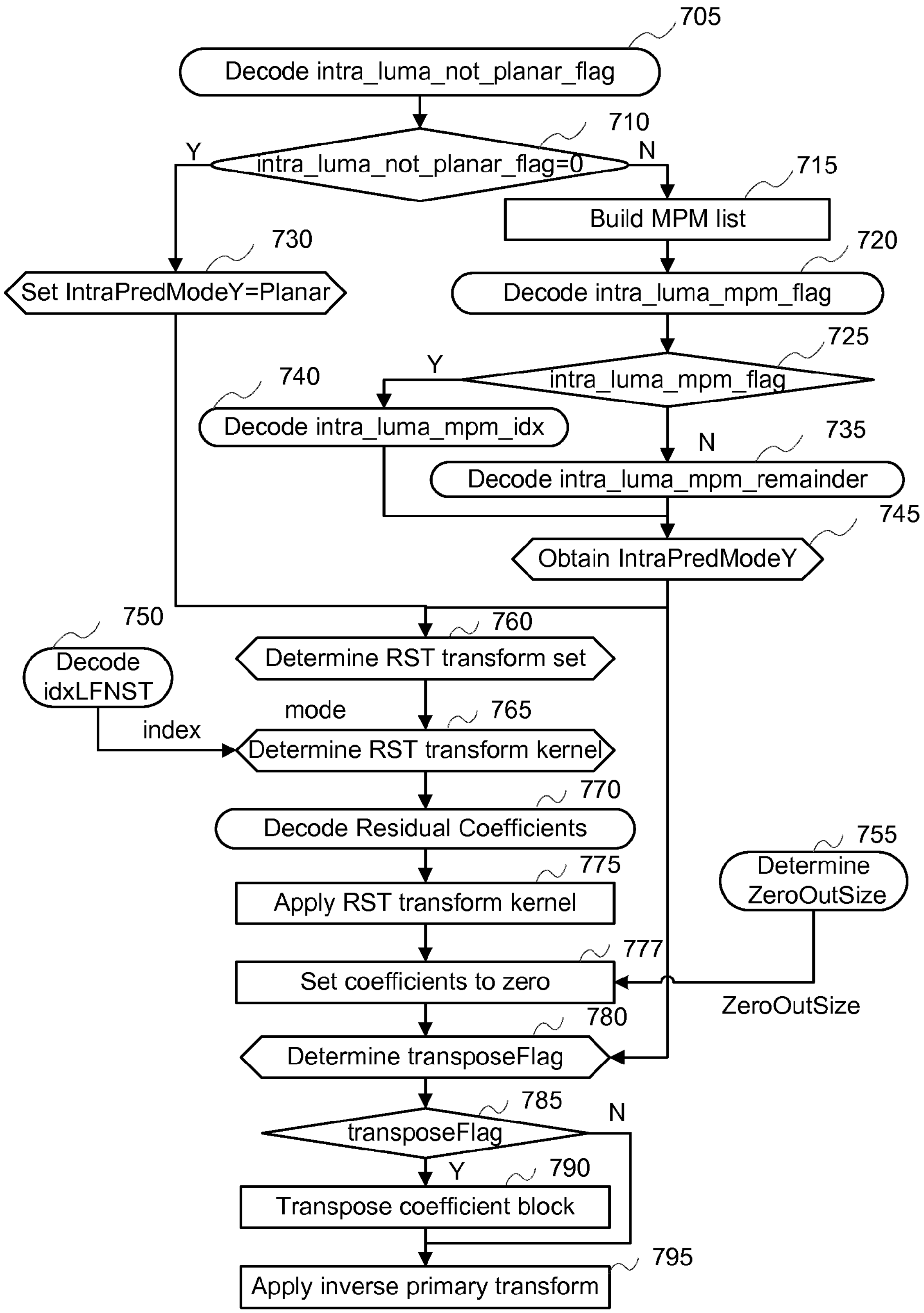
705
Decode intra_luma_not_planar_flag
710
intra_luma_not_planar_flag=0
Y
N
715
Build MPM list
720
Decode intra_luma_mpm_flag
730
Set IntraPredModeY=Planar
725
intra_luma_mpm_flag
Y
740
Decode intra_luma_mpm_idx
N
735
Decode intra_luma_mpm_remainder
745
Obtain IntraPredModeY
750
Decode idxLFNST
760
Determine RST transform set
mode
765
index
Determine RST transform kernel
770
Decode Residual Coefficients
775
Apply RST transform kernel
755
Determine ZeroOutSize
777
Set coefficients to zero
ZeroOutSize
780
Determine transposeFlag
785
transposeFlag
N
Y
790
Transpose coefficient block
795
Apply inverse primary transform

FIG. 7

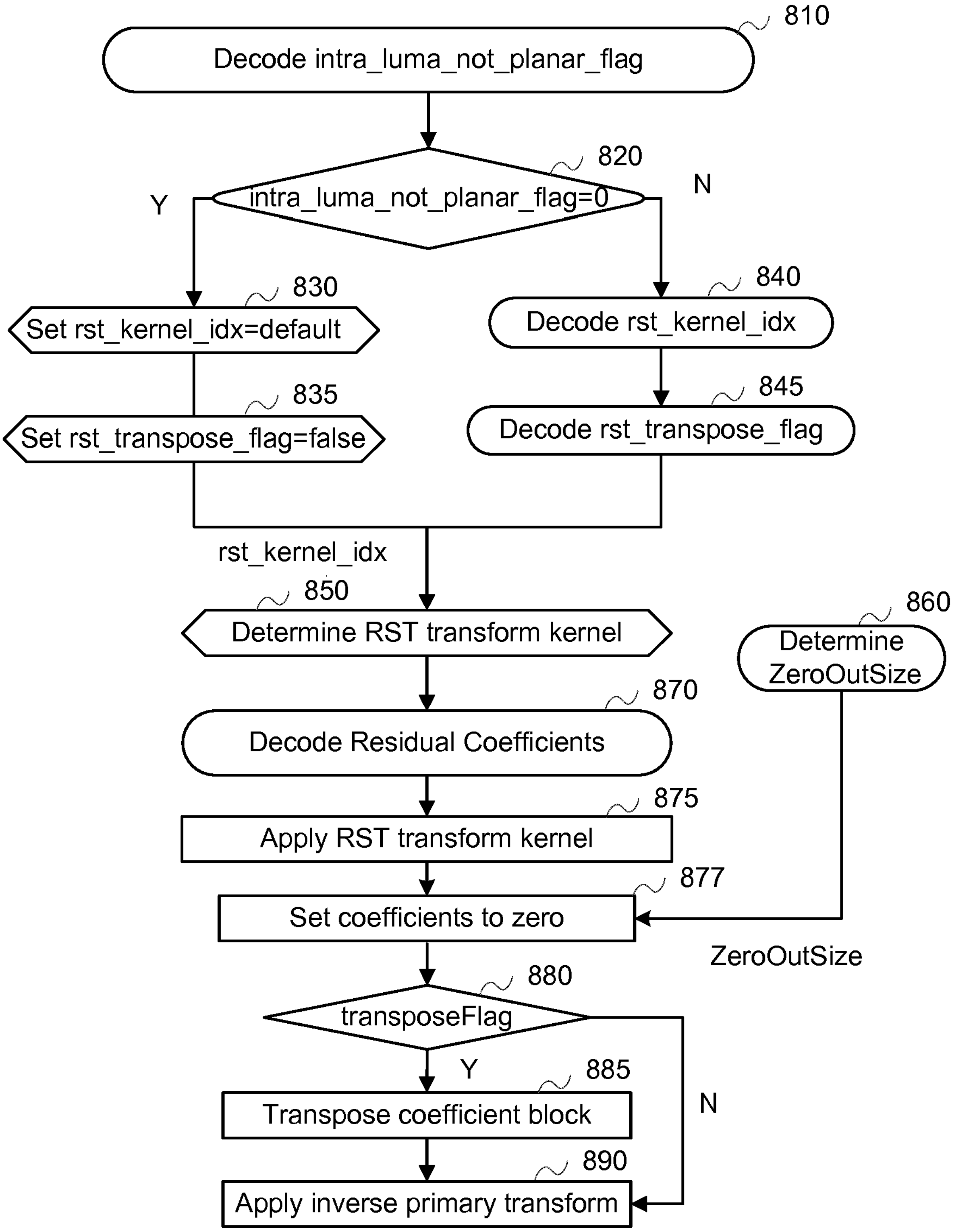
810
Decode intra_luma_not_planar_flag
820
intra_luma_not_planar_flag=0
Y
N
830
Set rst_kernel_idx=default
840
Decode rst_kernel_idx
835
Set rst_transpose_flag=false
845
Decode rst_transpose_flag
rst_kernel_idx
850
Determine RST transform kernel
860
Determine ZeroOutSize
870
Decode Residual Coefficients
875
Apply RST transform kernel
877
Set coefficients to zero
ZeroOutSize
880
transposeFlag
Y
N
885
Transpose coefficient block
890
Apply inverse primary transform

FIG. 8

Europäisches Patentamt
European Patent Office
Office européen des brevets

# EUROPEAN SEARCH REPORT

Application Number
EP 19 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/288439 A1 (HSU CHIH-WEI [TW] ET AL) 4 October 2018 (2018-10-04)<br>* abstract; figures 7,11 *<br>----- | 1-15 | INV.<br>H04N19/00 |
| X | ROSEWARNE C ET AL: "CE6-related: RST binarization",<br>126. MPEG MEETING; 20190325 - 20190329; GENEVA; (MOTION PICTURE EXPERT GROUP OR ISO/IEC JTC1/SC29/WG11),<br>,<br>no. m46761<br>12 March 2019 (2019-03-12), XP030209236,<br>Retrieved from the Internet:<br>URL:http://phenix.int-evry.fr/mpeg/doc_end_user/documents/126_Geneva/wg11/m46761-JVET-N0105-v1-JVET-N0105-v1.zip JVET-N0105.docx<br>[retrieved on 2019-03-12]<br>* abstract *<br>* paragraph [0001] *<br>* paragraph [0002] *<br>----- | 1-15 | |
| | | | TECHNICAL FIELDS SEARCHED (IPC) |
| X | US 2017/094314 A1 (ZHAO XIN [US] ET AL) 30 March 2017 (2017-03-30)<br>* abstract *<br>----- | 1-15 | H04N |
| X | US 2018/302631 A1 (CHIANG MAN-SHU [TW] ET AL) 18 October 2018 (2018-10-18)<br>* abstract *<br>* figures 1,7,11 *<br>-----<br>-/-- | 1-15 | |

The present search report has been drawn up for all claims

| Place of search | Date of completion of the search | Examiner |
|---|---|---|
| The Hague | 22 November 2019 | Giannotti, Pantaleo |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAID (QUALCOMM) A ET AL: "Description of Core Experiment 6 (CE6): Transforms and transform signalling", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L1026 3 November 2018 (2018-11-03), XP030198599, Retrieved from the Internet: URL:http://phenix.int-evry.fr/jvet/doc_end_user/documents/12_Macao/wg11/JVET-L1026-v2.zip JVET-L1026-v2-clean.docx [retrieved on 2018-11-03] * the whole document * ----- | 1-15 | |
| A | ZHAO (TENCENT) L ET AL: "CE3-related: Unified MPM list based on CE3-3.3 and CE3-3.5.1", 126. MPEG MEETING; 20190325 - 20190329; GENEVA; (MOTION PICTURE EXPERT GROUP OR ISO/IEC JTC1/SC29/WG11), , no. m47056 19 March 2019 (2019-03-19), XP030210513, Retrieved from the Internet: URL:http://phenix.int-evry.fr/mpeg/doc_end_user/documents/126_Geneva/wg11/m47056-JVET-N0394-v3-JVET-N0394-r2.zip JVET-N0394-r2/JVET-N0394.pptx [retrieved on 2019-03-19] * the whole document * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 22 November 2019 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

page 2 of 5

Europäisches Patentamt
European Patent Office
Office européen des brevets

# EUROPEAN SEARCH REPORT

Application Number
EP 19 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAO (FUJITSU) J ET AL: "CE3-related: Explicitly signal non angular modes with encoding changes", 126. MPEG MEETING; 20190325 - 20190329; GENEVA; (MOTION PICTURE EXPERT GROUP OR ISO/IEC JTC1/SC29/WG11), , no. m46828 12 March 2019 (2019-03-12), XP030209509, Retrieved from the Internet: URL:http://phenix.int-evry.fr/mpeg/doc_end_user/documents/126_Geneva/wg11/m46828-JVET-N0170-v3-JVET-N0170.zip JVET-N0170/CE3-related Explicitly signal non angular modes with encoding changes_r1.docx [retrieved on 2019-03-12] * the whole document * ----- | 1-15 | |
| A | YAO (FUJITSU) J ET AL: "CE3-related: Explicitly signal non angular modes with encoding changes", 126. MPEG MEETING; 20190325 - 20190329; GENEVA; (MOTION PICTURE EXPERT GROUP OR ISO/IEC JTC1/SC29/WG11), , no. m46828 15 March 2019 (2019-03-15), XP030209510, Retrieved from the Internet: URL:http://phenix.int-evry.fr/mpeg/doc_end_user/documents/126_Geneva/wg11/m46828-JVET-N0170-v3-JVET-N0170.zip JVET-N0170/JVET-N0170.pptx [retrieved on 2019-03-15] * the whole document * ----- | 1-15 | TECHNICAL FIELDS SEARCHED (IPC) |
| | -/-- | | |

The present search report has been drawn up for all claims

| Place of search | Date of completion of the search | Examiner |
|---|---|---|
| The Hague | 22 November 2019 | Giannotti, Pantaleo |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOSSEN (SHARPLABS) F ET AL: "CE3-3.4-related: unified MPM list construction", 126. MPEG MEETING; 20190325 - 20190329; GENEVA; (MOTION PICTURE EXPERT GROUP OR ISO/IEC JTC1/SC29/WG11), , no. m47112 20 March 2019 (2019-03-20), XP030210738, Retrieved from the Internet: URL:http://phenix.int-evry.fr/mpeg/doc_end_user/documents/126_Geneva/wg11/m47112-JVET-N0450-v2-JVET-N0450.zip JVET-N0450/JVET-N0450.docx [retrieved on 2019-09-26] * the whole document * | 1-15 | |
| A | WANG (HUAWEI) B ET AL: "CE3-related: A unified MPM list for intra mode coding", 126. MPEG MEETING; 20190325 - 20190329; GENEVA; (MOTION PICTURE EXPERT GROUP OR ISO/IEC JTC1/SC29/WG11), , no. m46843 4 April 2019 (2019-04-04), XP030209600, Retrieved from the Internet: URL:http://phenix.int-evry.fr/mpeg/doc_end_user/documents/126_Geneva/wg11/m46843-JVET-N0185-v7-JVET-N0185-v7.zip JVET-N0185-v7/JVET-N0185.pptx [retrieved on 2019-04-04] * the whole document * | 1-15 | TECHNICAL FIELDS SEARCHED (IPC) |

-/--

The present search report has been drawn up for all claims

3

| Place of search | Date of completion of the search | Examiner |
|---|---|---|
| The Hague | 22 November 2019 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 30 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOO (LGE) M ET AL: "CE6: Reduced Secondary Transform (RST) (test 6.5.1)", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0292 12 January 2019 (2019-01-12), XP030201761, Retrieved from the Internet: URL:http://phenix.int-evry.fr/jvet/doc_end_user/documents/13_Marrakech/wg11/JVET-M0292-v5.zip RST_M0292.pptx [retrieved on 2019-01-12] * the whole document * ----- | 1-15 | |

TECHNICAL FIELDS SEARCHED (IPC)

The present search report has been drawn up for all claims

3

| Place of search | Date of completion of the search | Examiner |
|---|---|---|
| The Hague | 22 November 2019 | Giannotti, Pantaleo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 5 of 5

## ANNEX TO THE EUROPEAN SEARCH REPORT ON EUROPEAN PATENT APPLICATION NO. EP 19 30 5794

This annex lists the patent family members relating to the patent documents cited in the above-mentioned European search report. The members are as contained in the European Patent Office EDP file on
The European Patent Office is in no way liable for these particulars which are merely given for the purpose of information.

22-11-2019

| Patent document cited in search report | Publication date | Patent family member(s) | Publication date |
|---|---|---|---|
| US 2018288439 A1 | 04-10-2018 | CN 110476426 A | 19-11-2019 |
| | | TW 201842779 A | 01-12-2018 |
| | | US 2018288439 A1 | 04-10-2018 |
| | | WO 2018177300 A1 | 04-10-2018 |
| US 2017094314 A1 | 30-03-2017 | AU 2016332317 A1 | 26-04-2018 |
| | | AU 2016332318 A1 | 26-04-2018 |
| | | BR 112018006367 A2 | 09-10-2018 |
| | | BR 112018006398 A2 | 09-10-2018 |
| | | CN 108141596 A | 08-06-2018 |
| | | CN 108141597 A | 08-06-2018 |
| | | EP 3357242 A1 | 08-08-2018 |
| | | EP 3357243 A1 | 08-08-2018 |
| | | JP 2018530245 A | 11-10-2018 |
| | | JP 2018530247 A | 11-10-2018 |
| | | KR 20180063186 A | 11-06-2018 |
| | | KR 20180063187 A | 11-06-2018 |
| | | TW 201715888 A | 01-05-2017 |
| | | TW 201722152 A | 16-06-2017 |
| | | US 2017094313 A1 | 30-03-2017 |
| | | US 2017094314 A1 | 30-03-2017 |
| | | WO 2017058614 A1 | 06-04-2017 |
| | | WO 2017058615 A1 | 06-04-2017 |
| US 2018302631 A1 | 18-10-2018 | TW 201842770 A | 01-12-2018 |
| | | US 2018302631 A1 | 18-10-2018 |
| | | WO 2018188648 A1 | 18-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. KOO et al.** CE6: Reduced Secondary Transform (RST) (CE6-3.1). *JVET 14th Meeting,* 19 March 2019
- **X. ZHAO et al.** CE6: Summary Report on Transforms and Transform Signaling. *JVET 14th Meeting,* 19 March 2019
- **C. ROSEWARNE et al.** CE6-related: RST binarisation. *JVET 14th Meeting,* 19 March 2019
- **J. YAO et al.** CE3-3.5: Explicitly signal non-angular modes in intra mode coding. *JVET 14th Meeting,* 19 March 2019
- **B. WANG et al.** CE3-related: A unified MPM list for intra mode coding. *JVET-N0185,* March 2019